# EUROPEAN PATENT APPLICATION

(11) **EP 1 580 658 A1**
(43) Date of publication of application: **28.09.2005**
(21) Application number: 03090367.8
(22) Date of filing: 24.10.2003
(51) Int. Cl.: G06F 9/445

(54) **Removable storage medium for audio-visual data**

(71) Applicant: DEUTSCHE THOMSON-BRANDT GMBH, 38048 Villingen-Schwenningen (DE)
(72) Inventor: Herpel, Carsten, 30171 Hannover (DE); Adolph, Dirk, 30952 Ronnenberg (DE); Hörentrup, Jobst, 30163 Hannover (DE); Ostermann, Ralf, 30167 Hannover (DE); Peters, Harmut, 30890 Barsinghausen (DE)
(74) Representative: Rittner, Karsten

(57) **Abstract**

Playback devices, e.g. DVD players, for removable mass storage media used for the distribution of multimedia content (2,3,4) contain a lot of firmware to control its functions. Typically, such firmware may be updated several times during the lifetime of the device. For playback devices that are already at a consumer's site and cannot be updated online, it is possible to update the firmware without using separate media, such as update-CDs, by storing firmware update data (5) on removable storage media such as DVDs or Blu-ray discs that contain primarily audiovisual contents (2,3,4). Thus, it is possible to utilize unused storage space on e.g. optical discs, and to distribute and install firmware updates easily without requiring separate media or technical knowledge of the user.

## Description

### Field of the invention

This invention relates to a removable storage medium for audio-visual data.

### Background

Movies, music and other electronic multimedia content is commonly distributed on exchangeable media, today usually being optical discs, for mass storage playback devices, such as e.g. DVD players. These exchangeable media holding the actual multimedia content data are also called removable storage media, since they can be removed from the device. Today, such mass storage playback devices contain a lot of firmware to control the functioning of the device. Firmware is understood as software, i.e. programs or data, which has been written onto non-volatile memories that are usually used in a read-only mode, e.g. electrically erasable programmable read-only memory (EEPROM) or flash memory. However, it is typical that such firmware should be updated several times during the time span in which a device is manufactured and sold, or during the lifetime of a device, in order to maintain or improve the devices capabilities. Therefore the non-volatile memories are usually rewritable.

Devices that are already out in the field, i.e. at a consumer's site, cannot be updated easily. With many of today's devices that have a connection to the Internet it is possible to update the firmware while the devices are already in the field. But a mass storage playback device, such as a standalone DVD player, usually has no Internet connection and, hence, has no easy possibility to be upgraded online without intervention of the owner of such a device.

It is common practice, though, to sell or distribute update-CDs with such firmware updates. It is quite obvious today that only technically skilled persons realize the existence of such update-CDs, or may actually apply them.

### Summary of the Invention

The problem to be solved by the invention is to distribute firmware update data for playback devices, which do not access said firmware update data via a network, and wherein the firmware update data should be easy to obtain and easy to apply.

A means to solve this problem is disclosed in claim 1. According to the invention, a removable storage medium that contains multimedia presentation data may be enhanced by adding firmware update data for playback devices. Particularly, a removable storage medium for distribution of audio-visual presentation data is disclosed, the removable storage medium comprising AV presentation data to be read by a playback device and firmware update data for a plurality of types of playback devices, wherein a portion of said firmware update data may be used for updating the functioning of a playback device of one of said plurality of types.

Advantageously, the enhanced removable storage media according to the invention make it easier for consumers to receive firmware update data for their electronic playback devices, with only a minimum of cost. Given the storage capacity of e.g. optical disk media, today about 5-10 Gbyte or for near-future media such as Blu-ray discs (BD) 25-50 Gbyte, additional storage of a few Mbyte of firmware update data on the disk is possible, which corresponds to less than 5% of the storage capacity, typically 1-2%. Hence it is possible to amend ordinary mass storage media, such as CD-ROM, DVD or BD, with an information repository that holds firmware update data for a number of mass storage devices of different brands in an ordered way, so that a playback device can, prior to playing back the inserted disc, check whether an applicable update exists for itself, and install such update as needed.

A method for updating a playback device for removable storage media is disclosed in claim 7. Particularly, the disclosed method for automatically updating a playback device for removable storage media, the removable storage media being used for distribution of AV presentation data, comprises the steps of detecting if a readable removable storage medium contains firmware update data suitable for updating the playback device, reading a first portion of data from said storage medium, the first portion containing firmware update data suitable for updating the playback device, storing the firmware update data or an applicable portion of the firmware update data within the playback device, and updating the firmware of the playback device with the firmware update data or an applicable portion of the firmware update data.

A playback device that uses the inventive method for updates is disclosed in claim 10. Particularly, the disclosed device for playback of removable storage media, the removable storage media being used for distribution of AV presentation data, comprises means for detecting if a readable removable storage medium contains firmware update data suitable for updating the playback device, means for reading a first portion of data from said storage medium, the first portion containing firmware update data suitable for updating the playback device, means for storing the firmware update data, or an applicable portion of the firmware update data within the playback device, and means for updating the firmware of the playback device with the firmware update data or an applicable portion of the firmware update data. Further, the device may also have other capabilities, such as e.g. recording.

The invention uses a method for conveying firmware update information in addition to user-desired content such as entertainment video being present on a removable mass storage medium, as well as an associated firmware update method to be implemented on respective playback devices capable of processing said removable mass storage media. Said firmware update information means is an organized data structure, namely a directory tree that may be sorted by manufacturer and/or model identification. Further, said firmware update method comprises checking for the existence of said firmware update data on each inserted removable mass storage medium, and specifically for the existence of an entry applicable to said specific playback device.

Furthermore, the update process may comprise caching an identified applicable update from an inserted mass storage medium, and applying it at any time that is convenient for the user, so that it does not interrupt or delay the user operation of said playback device.

Advantageous embodiments of the invention are disclosed in the dependent claims, the following description and the figures.

### Brief description of the drawings

Exemplary embodiments of the invention are described with reference to the accompanying drawings, which show in
Fig.1 the directory structure as proposed for Blu-ray disc;
Fig.2 a directory structure amended by an information repository embodied as directory tree;
Fig.3 a directory structure amended by an information repository embodied as database file; and
Fig.4 main components of an exemplary playback device.

### Detailed description of the invention

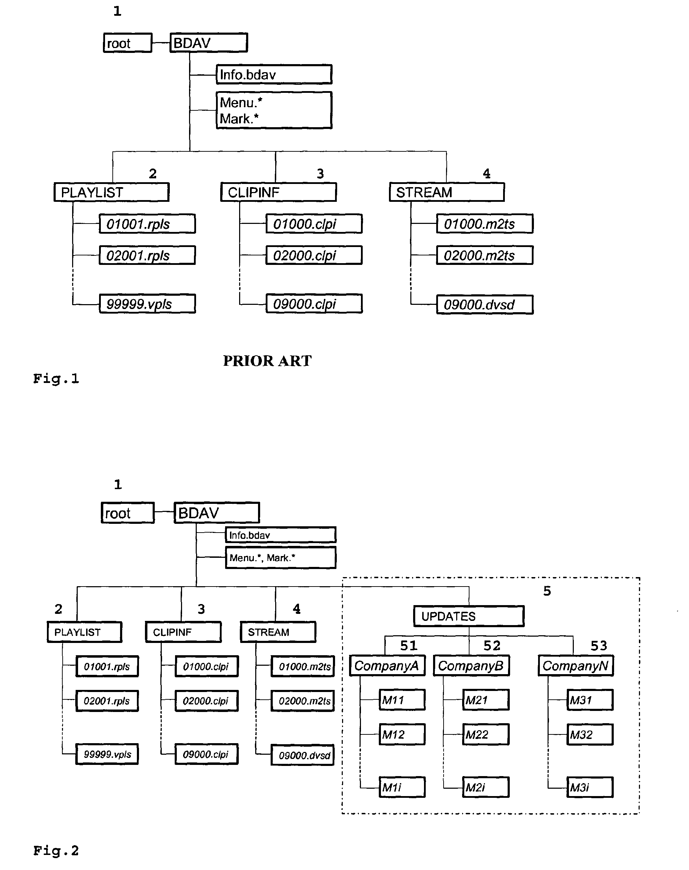

Mass storage media for distribution of movies or other AV contents may use a directory structure as shown exemplarily for Blu-ray discs (BD) in Fig.1. In a common root directory 1 is a branch for BD audio-visual data BDAV, which in turn has subbranches for playlists 2, clip related information CLIPINF 3 and the actual AV streams STREAM 4. Each subbranch contains one or more files, with the relation between files from different subbranches being given by file names, e.g. the files 01001.rpls, 01000.clpi and 01000.m2ts belong together.

The invention may be embodied by implementing an information repository with firmware update data as an additional subtree within the directory structure shown in Fig.1. The information repository may use several files being located in one or more subbranches, or alternatively one single data base file located at a known location in the directory tree, preferably with an included or separate index of contents.

Fig.2 shows the directory structure of an enhanced type of BD according to the invention with an additional branch UPDATES 5 for firmware update data. The firmware update data are sorted e.g. by playback device manufacturers in subfolders **51,...,53,** with separate files **M11,...,M3i** per playback device type or model from the respective manufacturer. A file with firmware update data may also be applicable to more than one model of the same manufacturer, or to compatible models from different manufacturers.

An advanced playback device may be programmed such that after disc insertion it searches initially for the default update folder UPDATES 5, then for a folder with its own manufacturer name, e.g. **CompanyA,** and then for a file with its own type name, e.g. **M11.** Then it may optionally check whether it has updated its firmware before with the respective firmware update version found on the disc. This may prevent multiple equivalent firmware updates e.g. when watching the same movie twice, and thus saves time.

Further, the number of possible firmware updates may be restricted for physical reasons. The playback device may also optionally ask for user confirmation before performing an update, e.g. via on-screen display (OSD). This is useful if a firmware update is not required, but only may lead to optional additional features. Then the device reads the appropriate firmware update data file, and stores the data. The firmware may be updated immediately, before presenting the AV contents of the disc, or the update data may be temporarily stored in order to perform an update afterwards, e.g. if an update takes some time and is not necessary for presenting the AV contents. The firmware update itself is usually done by replacing a portion of firmware data stored on a non-volatile memory, e.g. electrically erasable programmable read-only memory (EEPROM) or flash memory, by the firmware update data from the removable storage medium. Alternatively, an obsolete portion of firmware in the non-volatile memory may be skipped. Often the firmware, or a portion of it, is copied into RAM during operation of the playback device. In this case it may also be useful to update the RAM copy of the firmware data.

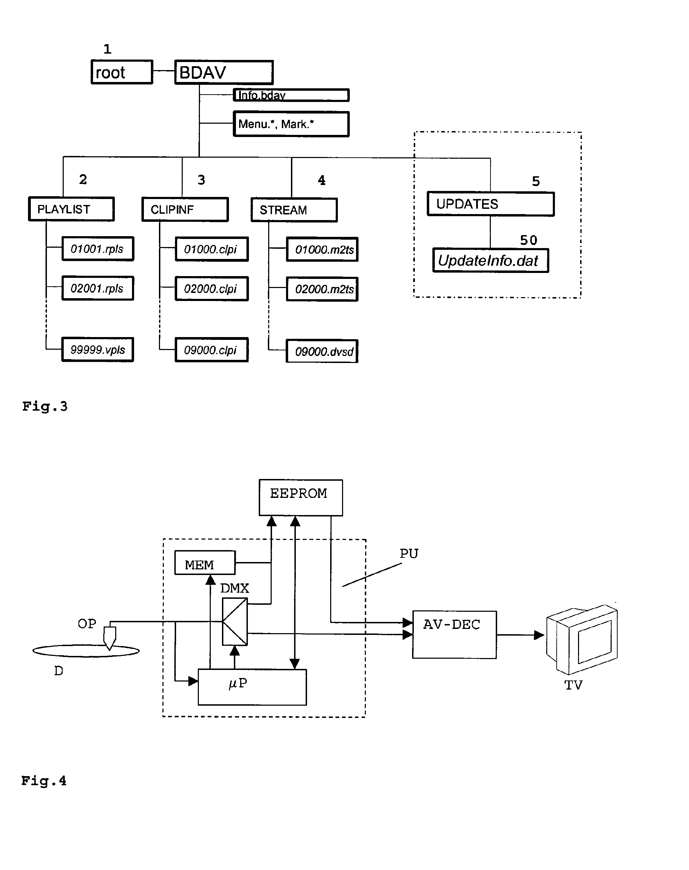

Alternatively, Fig.3 shows the directory structure of another enhanced type of BD according to the invention with an additional branch UPDATES 5 that holds only a single file UpdateInfo.dat 50, which may contain update data for several types of playback devices from one or more manufacturers. In this case a playback device reads the file UpdateInfo.dat 50 before it can detect if the file contains applicable firmware update data. Therefore the file may contain a list or index of devices for which it may provide firmware update data, or such list could be in a separate file in the UPDATES directory 5.

The main components of an exemplary playback device using the invention are shown in Fig.4. Data are read from an optical disc D via an optical pick-up OP and sent to a processing unit **PU.** The processing unit **PU** is implemented as a microprocessor **µP** or the like, or comprises such device. Further, the processing unit **PU** comprises a kind of demultiplexer **DMX** that is controlled by the microprocessor **µP** and directs the data that are received from the optical pick-up **OP** either to a non-volatile memory **EEPROM** for firmware, or to an AV decoding unit **AV-DEC,** depending on the type of data. Therefore the microprocessor **µP** analyses the data, e.g. detects firmware update data and compares the versions of firmware in the memory EEPROM and firmware update data from the disc D, decides whether a firmware update is necessary and may also control the optical pick-up OP in order to jump to a required position on the disc D, where an appropriate firmware update file or the actual AV data files are located. Further, a memory MEM for temporary storage of the read data is provided. The memory **MEM** is also controlled by the microprocessor **µP** and may be used for buffering the read data, e.g. for the mentioned comparison of versions, or for later firmware update to be done within the non-volatile memory **EEPROM.** The AV decoding unit **AV-DEC,** e.g. comprising an MPEG decoder, outputs its data towards a display device, such as a television set **TV.** The firmware stored in the non-volatile memory **EEPROM** may be used inter alia for running the microprocessor **µP** or the AV decoding unit **AV-DEC,** and may also contain other data, e.g. for generating a menu for user control of the playback device.

Thus, a single storage medium that a consumer would acquire because of its multimedia content combines user-desired content data with device-required operating data, i.e. firmware updates, which enables an advanced type of mass storage playback device to automatically identify and apply the device-required data.

Advantages of the proposed combination of AV content and device update data are that the consumer needs not care for getting or installing update-CDs or the like, and that the storage capacity of removable storage media is better utilized, and therefore costs are saved. Further advantages are that also devices can easily be updated that have no Internet connection, and that a consumer who purchases a multimedia disc, e.g. a movie on DVD-Video, can be sure to have the correct firmware version that is required for playing back the multimedia contents.

In terms of production flow, the invention enables device manufacturers to voluntarily supply storage media replication facilities with such firmware update information. These storage media reproduction facilities may integrate such updates into all media replicated from that time onwards, or e.g. into special editions of storage media. Hence, the consumer would be able to upgrade a playback device to the latest firmware version - without knowing it - by buying the latest Hollywood movie.

Further, content producers can always assume that all playback devices in the field adhere to the latest version of firmware available at the date of production of a new title, e.g. a movie on BD.

Content replicators may acquire a consolidated set of firmware update information for all known applicable playback devices, and thus offer an additional service to their customers and add value to their products. When collecting firmware update information from content producers, a content replicator may log new incoming firmware update information items e.g. for billing purposes.

Preferably only the latest firmware update version for any specific playback device is stored on the removable storage medium, since the available storage space is limited and the searching is faster. Also, a higher number of device types may be supported. Anyway, in few cases it may be reasonable to store not only the latest firmware update version but also a previous version or other additional data, e.g. due to incompatibility.

In another embodiment, a firmware version that is optimised for the particular disc content is provided. When another disc is inserted, the firmware may be downgraded again. Alternatively, content specific optimisation of firmware may also be applied to a RAM copy only, without modifying the actual firmware of the playback device.

The playback devices mentioned in this application are understood as any devices that may playback data from removable storage media, including devices that have additional recording or other capabilities.

The invention is particularly advantageous for prerecorded DVDs or successor products, such as Blu-ray discs (BDP) or comparable high-capacity optical storage media.

## Claims

1. Removable storage medium for distribution of audio-visual presentation data (2,3,4), the removable storage medium comprising
- audio-visual presentation data (2,3,4) to be read by a playback device; and
- firmware update data (5) for a plurality of types (M11,...,M3i) of playback devices, wherein a portion of said firmware update data may be used for updating the functioning of a playback device of one of said plurality of types.

2. Removable storage medium according to claim 1, wherein the firmware update data are stored within a single file (50) on said removable storage medium.

3. Removable storage medium according to claim 1, wherein the firmware update data are stored within a plurality of files (M11,...,M3i) within a single dedicated branch (5), or subbranches (51,52,53) of a dedicated single branch (5) of a directory tree on said removable storage medium.

4. Removable storage medium according to any of the previous claims, wherein the firmware update data stored on the removable storage medium are only temporarily stored in the playback device, and replace a portion of the firmware of the device.

5. Removable storage medium according to any of the previous claims, wherein the updateable functioning of the playback device refers to the user interface or the reproduction of said audio-visual data.

6. Removable storage medium according to any of the previous claims, containing a data structure that comprises separate branches for audio-visual playlists (2), clip related information (3), audio-visual data streams (4) and firmware update data (5).

7. Method for automatically updating a playback device for removable storage media, the removable storage media being used for distribution of audio-visual presentation data (2,3,4), comprising the steps of
- detecting if a readable removable storage medium contains firmware update data (5,50) suitable for updating the playback device;
- reading a first portion of data (50) from said storage medium, the first portion containing firmware update data suitable for updating the playback device;
- storing the firmware update data, or an applicable portion of the firmware update data within the playback device; and
- updating the firmware of the playback device with the firmware update data, or an applicable portion of the firmware update data.

8. Method according to claim 7, further comprising the step of reading and reproducing audio-visual presentation data from said removable storage medium.

9. Method according to claim 7 or 8, further comprising the step of detecting if said firmware update data is already available to said playback device, initially or from an earlier update process.

10. Playback device for removable storage media, the removable storage media being used for distribution of audio-visual presentation data (2,3,4), the device comprising
- means (µP) for detecting if a readable removable storage medium (D) contains firmware update data suitable for updating the playback device;
- means (OP) for reading a first portion of data from said storage medium (D), the first portion containing firmware update data suitable for updating the playback device;
- means (MEM) for storing the firmware update data, or an applicable portion of the firmware update data within the playback device; and
- means (EEPROM) for updating the firmware of the playback device with the firmware update data, or an applicable portion of the firmware update data.
